# EUROPÄISCHE PATENTSCHRIFT

(11) **EP 1 425 639 B1**
(45) Veröffentlichungstag und Bekanntmachung des Hinweises auf die Patenterteilung: **12.04.2006**
(21) Anmeldenummer: 02762244.8
(22) Anmeldetag: 23.08.2002
(51) Int. Cl.: G05B 19/05, G06F 17/30

(54) **VERFAHREN ZUR ÜBERTRAGUNG EINES PROZESSWERTS UND STEUERUNGSSYSTEM**
METHOD FOR TRANSMISSION OF A PROCESS VALUE AND CONTROL SYSTEM
PROCEDE DE TRANSMISSION D'UNE VALEUR DE PROCESSUS ET SYSTEME DE COMMANDE

(30) Priorität: 10.09.2001 DE 10144332
(43) Veröffentlichungstag der Anmeldung: 09.06.2004
(73) Patentinhaber: SIEMENS AKTIENGESELLSCHAFT, 80333 München (DE)
(72) Erfinder: BECKER, Hans, 90480 Nürnberg (DE); SCHLERETH, Michael, 91452 Wilhermsdorf (DE)
(86) Internationale Anmeldenummer: PCT/DE2002/003103
(87) Internationale Veröffentlichungsnummer: WO 2003/025744

(56) Entgegenhaltungen:
- EP-A- 0 825 506
- US-A- 6 061 603
- "c-internet connector box miniwebserver" BEDIENUNGSANLEITUNG REV 2.0 INTERNET CONNECTOR BOX, XX, XX, 10. Juli 1999 (1999-07-10), Seiten 1-121, XP002163955
- WOLLSCHLAEGER M: "Intranet-based management framework for industrial communication systems" EMERGING TECHNOLOGIES AND FACTORY AUTOMATION, 1999. PROCEEDINGS. ETFA '99. 1999 7TH IEEE INTERNATIONAL CONFERENCE ON BARCELONA, SPAIN 18-21 OCT. 1999, PISCATAWAY, NJ, USA,IEEE, US, 18. Oktober 1999 (1999-10-18), Seiten 823-830, XP010365709 ISBN: 0-7803-5670-5

## Beschreibung

Die Erfindung betrifft ein Verfahren zur Übertragung eines Prozesswerts von einer Steuereinheit zu einem Client-Computer sowie ein Verfahren zur Übertragung eines Eingabewerts von einem Client-Computer zu einer Steuereinheit und ein entsprechendes Steuerungssystem und Computerprogrammprodukt.

Es ist an sich aus dem Stand der Technik bekannt ein Steuerungssystem, beispielsweise eine speicherprogrammierbare Steuerung (SPS), mit einem Anlagen-Server zu verknüpfen, auf den ein Client-Computer zugreifen kann. Der Client-Computer kann von dem Server-Computer html-Seiten laden, beispielsweise um Prozesswerte auf einer Benutzerschnittstelle anzuzeigen. Die Verknüpfung zwischen einem Ausgabefeld der html-Seite und dem Prozesswert ist dabei beispielsweise mittels eines JAVA-Skripts oder mittels OCX (OLE Control Extension) fest programmiert.

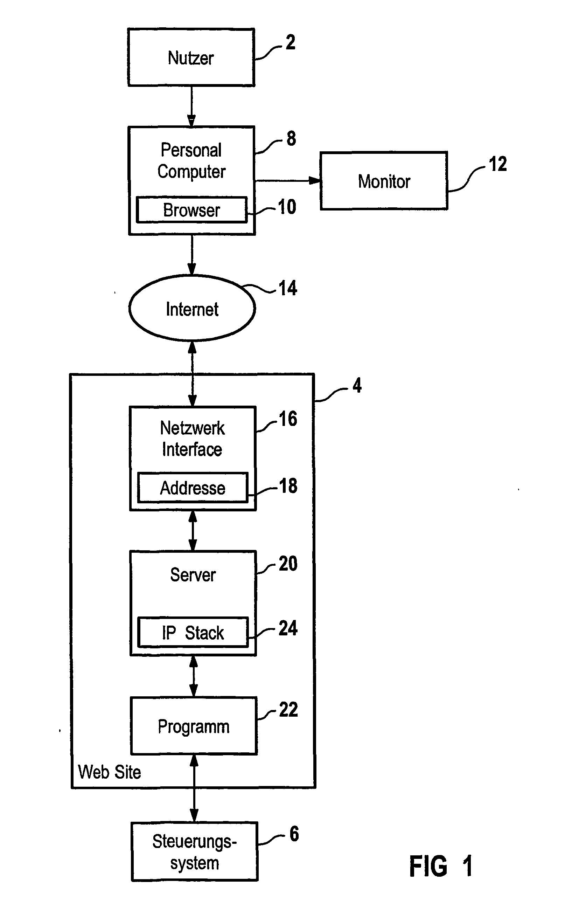

Aus der US-A-6061603 ist ein System für den Fernzugriff auf ein Steuerungssystem über ein kommerzielles Kommunikationsnetz bekannt. Die Fig. 1 zeigt ein Blockdiagramm dieses vorbekannten Systems.

Zu dem System gehört ein Personal-Computer 8 mit einem Browser-Programm 10. Bei dem Browser 10 kann es sich um einen kommerziell erhältlichen Internet-Browser wie zum Beispiel Netscape Communication Navigator oder Microsoft Internet Explorer handeln. Das Browser-Programm 10 dient zum Zugriff auf eine so genannte Website 4 über das Internet 14 zur Anzeige der Inhalte der Website 4 auf dem Monitor 12 des Personal-Computers 8 für einen Nutzer 2.

Die Website 4 beinhaltet ein Netzwerk-Interface 16 mit einer eindeutigen Internetadresse 18 sowie einen Server-Computer 20 und ein Anwendungsprogramm 22. Der Server-Computer 20 dient zur Interpretierung von HTTP-Protokollen und verwendet TCP/IP mittels TCP/IP Stack 24, um mit dem Netzwerk-Interface 16 und dem Anwendungsprogramm 22 zu interagieren. Dadurch wird der Datentransfer zwischen dem Anwendungsprogramm 22 und dem Nutzer 2 über das Internet 14 ermöglicht.

Das Anwendungsprogramm liefert Daten von einem Steuerungssystem 6. Diese Daten können zur Überwachung der Steuerung durch den Nutzer 2 genutzt werden, da diese Daten mittels des TCP/IP Stack 24 von der Website 4 über das Internet 14 zu dem Personal-Computer 8 des Nutzers 2 übertragen werden können. Dadurch wird auf dem Personal-Computer 8 eine Mensch-Maschine-Schnittstelle geschaffen.

Der Nutzer 2 kann eine Verbindung mit dem Internet 14 über einen so genannten Internet-Service-Provider herstellen und dann die Adresse der Website 4 in das Browser-Programm 10 eingeben. Der Nutzer 2 kann dann mittels des Browsers 10 beispielsweise eine Homepage der Website 4 lesen und von dort Informationen abrufen. Aufgrund einer Eingabe des Nutzers 2 sendet der Browser 10 Kommandos an die Website 4, die das Anwendungsprogramm 22 nutzt, um Informationen, die von dem Steuerungssystem 6 zur Verfügung gestellt werden, zur Anzeige zu bringen. Nachteilig bei diesen vorbekannten Systemen ist insbesondere, dass das Anwendungsprogramm 22 spezifisch für ein bestimmtes Steuerungssystem 6 programmiert sein muss und keinerlei Flexibilität erlaubt.

Aus dem Dokument XP 002163955, "c-Internet connector box miniwebserver", Bedienungsanleitung Rev 2.0 Internet Connector Box, Xx, Xx (10-07-1999), 1-121 ist eine Vorrichtung (ICB) mit einem eingebetteten Internet Server bekannt, bei dem dynamische Internetseiten aus einer HTML-Vorlage erzeugt werden können. Dabei können bis zu drei Geräte, die ein Sonderprotokoll unterstützen, an die Vorrichtung angeschlossen werden. Um mit solchen Geräten zu kommunizieren, verwendet die Vorrichtung eine Information, die die Geräte in deren Initialisierungsphase zur Vorrichtung gesendet haben.

Aus der XP010365709, Emerging Technologies And Factory Automation, 1999, Proceedings, Etfa '99, 1999 7^{th} Ieee International Conference On Barcelona, Spain 18-21 Oct. 1999, Piscataway, Nj, Usa,ieee, Us (18-10-1999), 823-830 ist ein Verfahren zum Zugang zu Feldbusgeräten mittels eines Client Computers über das Internet bekannt. Dabei wird eine Datenbank oder ein XML-Dokument zur Beschreibung der Feldbusgeräte benutzt. Der Inhalt der HTML-Seiten wird dann mittels der Informationen aus der Datenbank bzw. des XML-Dokuments generiert.

Der Erfindung liegt daher die Aufgabe zu Grunde ein verbessertes Verfahren zur Übertragung eines Prozesswerts von einer Steuereinheit zu einem Client-Computer sowie ein Verfahren zur Übertragung eines Eingabewerts von einem Client-Computer zu einer Steuereinheit und ein entsprechendes Steuerungssystem und Computerprogrammprodukt zu schaffen.

Die der Erfindung zu Grunde liegende Aufgabe wird mit den Merkmalen der unabhängigen Patentansprüche jeweils gelöst.

Bevorzugte Ausführungsformen der Erfindung sind in den abhängigen Ansprüchen angegeben.

Die Erfindung erlaubt es die Verbindungen zwischen den Feldern einer html-Seite und den Prozesswerten auf dem Server zu parametrieren und mit der html-Seite vom Server-Computer auf den Client-Computer zu übertragen. Elemente auf der html-Seite können dabei durch ein ID-Attribut identifiziert werden, wobei der Elementtyp beliebig sein kann.

Von besonderem Vorteil ist dabei, dass die graphische Gestaltung der html-Seite zunächst unabhängig von den konkreten Engineeringdaten, d.h. beispielsweise den konkreten Adressen des Steuerungssystems, sein kann. Die Verknüpfung der einzelnen Felder der html-Seite erfolgt dann nachträglich über eine weiteres Dokument in einer Auszeichnungssprache, beispielsweise XML.

Dies erlaubt größtmögliche Flexibilität auch hinsichtlich Änderungen auf der html-Seite oder Änderungen hinsichtlich des Steuerungssystems, beispielsweise wenn ein Steuerungssystem durch ein Steuerungssystem eines neuen Typs ersetzt werden soll, welches unterschiedliche Adressbereiche aufweist. In diesem Fall ist lediglich die Zuordnung der Adressbereiche zu den entsprechenden Feldern in der html-Seite in dem XML Dokument neu vorzunehmen.

Von besonderem Vorteil ist dabei ferner, dass dieser flexible Zugriff des Nutzers auf die Anlagensteuerung auch über eine so genannte Firewall erfolgen kann. Der Nutzer kann sich also von jedem beliebigen Ort zunächst beispielsweise in ein firmeninternes Intranet über eine entsprechende Firewall einloggen, um dann mit dem Anlagen-Server Kontakt aufzunehmen. Dabei ist besonders vorteilhaft, dass der Nutzer neben der Visualisierung von Prozesswerten auch Eingaben tätigen kann.

Im Weiteren wird ein bevorzugtes Ausführungsbeispiel der Erfindung mit Bezug auf die Zeichnungen näher erläutert. Es zeigen:
- Fig. 1: ein Blockdiagramm eines aus dem Stand der Technik bekannten Steuerungssystems,
- Fig. 2: ein Blockdiagramm einer ersten Ausführungsform des erfindungsgemäßen Steuerungssystems,
- Fig. 3: ein Blockdiagramm einer zweiten Ausführungsform des erfindungsgemäßen Steuerungssystems,
- Fig. 4: ein Flussdiagramm einer Ausführungsform des Verfahrens zur Übertragung eines Prozesswertes von einer Steuereinheit zu einem Client-Computer,
- Fig. 5: eine Ausführungsform des Verfahrens zur Übertragung eines Eingabewerts von einem Client-Computer zu einer Steuereinheit,
- Fig. 6: ein Blockdiagramm einer dritten Ausführungsform des erfindungsgemäßen Steuersystems.

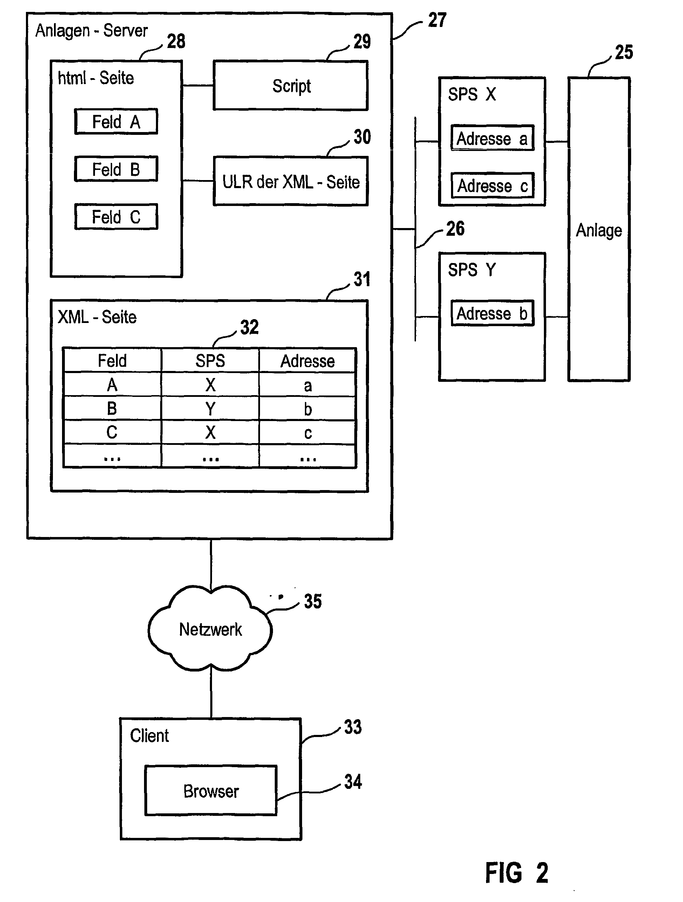

Die Fig. 2 zeigt ein Blockdiagramm eines Steuerungssystems zur Steuerung und/oder Regelung einer Anlage 25. Die Anlage 25 ist mit ein oder mehreren Steuereinheiten, so genannten speicherprogrammierbaren Steuerungen (SPS), verbunden - in dem gezeigten Beispiel die SPS X und die SPS Y. Die beiden Steuereinheiten SPS X und SPS Y haben jeweils verschiedene Adressen beispielsweise für den Zugriff auf Daten. Insbesondere hat die Steuereinheit SPS X die Adressen a und c für die Speicherung von Prozesswerten; die Steuereinheit SPS Y hat die Adresse b.

Die Steuereinheiten SPS X und SPS Y sind über einen Feldbus 26 mit einem Anlagen-Server-Computer 27 verbunden. Der Anlagen-Server-Computer 27 kann über den Feldbus 26 auf die Speicheradressen a, c der SPS X sowie die Adresse b der SPS Y Schreib-/Lese-Zugriffe durchführen.

Der Aniagen-Server-Computer 27 beinhaltet ein Dokument 28 in einer Auszeichnungssprache. Im dem Beispiel der Fig. 2 handelt es sich bei der Auszeichnungssprache des Dokuments 28 um die hypertext-markup-language (html). Das Dokument 28 beinhaltet die Felder A, B und C zur Anzeige und/oder graphischen Visualisierung von Prozesswerten und/oder zur Eingabe von Werten. Zusätzlich ist in dem Dokument 28 ein Skript 29 codiert. Dabei kann es sich beispielsweise um ein JAVA-Skript handeln. Alternativ zu dem Skript 29 kann auch ein so genanntes Applet vorgesehen sein.

Weiter ist in dem Dokument 28 ein Zeiger 30 auf ein Dokument 31 codiert. Beispielsweise kann der Zeiger 30 aus dem Uniform-Resource-Locator (URL) des Dokuments 31 bestehen.

Das Dokument 31 liegt ebenfalls in einer Auszeichnungssprache vor, wobei es sich in dem Beispiel der Fig. 2 um eine Extended-Markup-Language (XML) handelt. In dem Dokument 31 ist eine Tabelle 32 codiert.

Die Tabelle 32 beinhaltet eine Zuordnung der Felder A, B und C des Dokuments 28 zu bestimmten Speicheradressen der Steuereinheiten SPS X und SPS Y. Beispielsweise ist in der Tabelle 32 das Feld A der SPS X zugeordnet und zwar der Adresse a der SPS X. Dagegen ist das Feld B der Adresse b der SPS Y und das Feld C der Adresse c der SPS X zugeordnet. Die Tabelle 32 kann weitere solche Zuordnungen für weitere Felder des Dokuments 28 auf weitere Adressen der SPS X und Y sowie gegebenenfalls weiterer Steuereinheiten beinhalten.

Ein Client-Computer 33 kann mittels eines Browsers 34 über ein Netzwerk 35 mit dem Anlagen-Server-Computer 27 in Verbindung treten. Bei dem Client-Computer 33 kann es sich um einen üblichen Personalcomputer, eine Bedienkonsole, einen mobilen Computer, ein mobiles Telefon mit WAP-Browser oder auch um ein so genanntes WAP-Pad handeln.

Bei dem Netzwerk 35 kann es sich um ein firmen- oder anlageninternes Netzwerk, ein Intranet, Extranet oder um das Internet handeln. Im letzteren Fall kann die Kommunikation auch über eine so genannte Firewall zwischen dem Client-Computer 33 und dem Anlagen-Server-Computer 27 aufgebaut werden. Als Browser kann ein handelsübliches Browserprogramm, beispielsweise der Netscape Communication Navigator oder Microsoft Internet Explorer verwendet werden.

Beim Betrieb des Systems der Fig. 2 geht ein Nutzer des Client-Computers 33 mittels des Browsers 34 über das Netzwerk 35 zu dem html Dokument 28, indem der Nutzer beispielsweise einen entsprechenden Hypertextlink selektiert oder die URL des Dokuments 28 in den Browser 34 eingibt.

Das Dokument 28 wird dann über das Netzwerk 35 zu dem Client-Computer 33 übertragen. Ferner wird das Skript 29 des Dokuments 28 automatisch auf dem Client-Computer 33 gestartet und ausgeführt. Bei dem Skript kann es sich beispielsweise um ein JAVA-Skript oder um ein Visual-Basic-Skript handeln; alternativ kann auch ein so genanntes Applet zur Anwendung kommen.

Das Skript 29 liest den Zeiger 30 des Dokuments 28 und greift auf das Dokument 31 auf dem Anlagen-Server-Computer 27 mittels der entsprechenden URL zu. Daraufhin wird das Dokument 31 über das Netzwerk 35 zu dem Client-Computer 33 übertragen.

Das Skript 29 liest dann die Zuordnungen der Felder A, B und C des Dokuments 28 zu den Adressen der Steuereinheiten SPS X und SPS Y aus der Tabelle 32 aus, beispielsweise für das Feld A die Adressangabe, dass ein entsprechender Prozesswert auf der SPS X unter der Adresse a gespeichert ist.

Das Skript 29 sendet dann ein Kommando an den Anlagen-Server-Computer 27, welches die den Feldern A, B und C zugeordneten Steuereinheiten und Adressen beinhaltet. Daraufhin greift der Anlagen-Server-Computer 27 über den Feldbus 26 auf die Steuereinheiten SPS X bzw. SPS Y zu, um die Inhalte der entsprechenden Speicherlokationen mit den Adressen a, b und c zu lesen.

Die entsprechenden auf diesen Speicheradressen gespeicherten Prozesswerte werden dann von dem Anlagen-Server-Computer 27 über das Netzwerk 35 an den Client-Computer 33 übertragen und von dem Skript 29 in den entsprechenden Feldern A, B und C des Dokuments 28 für den Benutzer angezeigt.

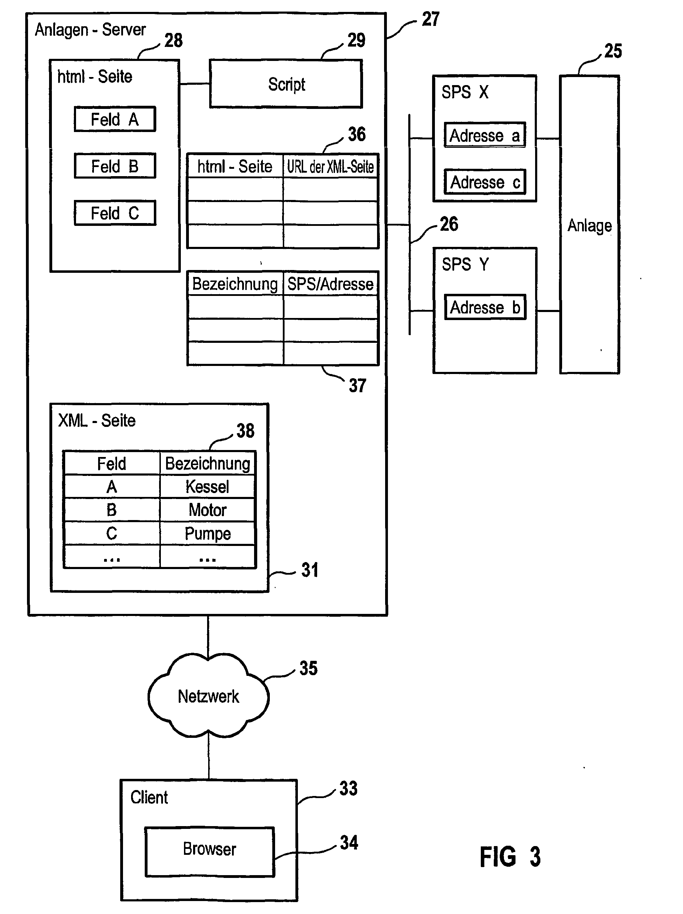

Die Fig. 3 zeigt eine alternative Ausführungsform der Ausführungsform der Fig. 2, bei der entsprechende Elemente mit den selben Bezugszeichen bezeichnet sind.

Im Unterschied zu der Ausführungsform der Fig. 2 beinhaltet der Anlagen-Server-Computer 27 der Fig. 3 die Dateien 36 und 37. Die Datei 36 beinhaltet eine Tabelle, die dem Dokument 28 einen Zeiger auf das zu dem Dokument 28 gehörende Dokument 31 zuordnet. Dies entspricht dem Zeiger 30 der Ausführungsform der Fig. 2, wobei die Datei 36 nicht zu dem Dokument 28 der Ausführungsform der Fig. 3 dazugehört, sondern separat auf dem Anlagen-Server-Computer 27 gespeichert ist. Falls weitere Dokumente 28 auf dem Anlagen-Server-Computer 27 vorhanden sind, beinhaltet die Datei 36 entsprechend Zeiger für die Zuordnung dieser weiteren Dokumente 28 zu entsprechenden weiteren Dokumenten 31.

In dem Dokument 31 ist eine Tabelle 38 codiert, die der Tabelle 32 der Ausführungsform der Fig. 2 entspricht. Im Unterschied zu der Tabelle 32 der Ausführungsform der Fig. 2 beinhaltet die Tabelle 38 der Ausführungsform der Fig. 3 keine konkreten Adressen, sondern lediglich die Bezeichnung von den Feldern A, B, C des Dokuments 28 zugeordneten Bezeichnungen von Parameterwerten. Beispielsweise ist das Feld A einem Parameterwert mit der Bezeichnung "Kessel" zugeordnet, beispielsweise der Kesseltemperatur; das Feld B ist einem Parameterwert mit der Bezeichnung "Motor", beispielsweise einer Motordrehzahl und das Feld C einem Parameterwert mit der Bezeichnung "Pumpe", beispielsweise einer Ventilstellung der Pumpe zugeordnet.

Die Datei 37, die separat von dem Dokument 28 auf dem Anlagen-Server-Computer 27 gespeichert ist ordnet je eine solche Bezeichnung einer Adresse auf einer Steuereinheit zu, beispielsweise die Bezeichnung "Kessel" zu der Steuereinheit SPS X und deren Speicheradresse a, die Bezeichnung "Motor" zu der Steuereinheit SPS Y und deren Adresse b usw.

Beim Betrieb des Systems der Fig. 3 wird dann wiederum das Dokument 28 von dem Client-Computer 33 geladen und das Skript 29 ausgeführt. Das Skript 29 fragt dann von der Datei 36 den dem Dokument 28 zugeordneten Zeiger auf das Dokument 31 ab und lädt dann mittels dieses Zeigers das Dokument 31. Mittels der den einzelnen Feldern A, B und C in der Tabelle 38 des Dokuments 31 zugeordneten Bezeichnungen fragt das Skript dann die Datei 37 ab, um die entsprechenden Adressen bzw. Steuereinheiten zu erhalten.

Mittels der so erhaltenen Adressen sendet das Skript 29 wiederum ein Kommando an den Anlagen-Server-Computer 27 zur Durchführung einer Abfrage der entsprechenden Parameterwerte von den spezifizierten Adressen der Steuereinheiten SPS X und SPS Y.

Bei dieser Ausführungsform ist besonders vorteilhaft, dass die Zuordnungen in dem Dokument 31 abstrakt erfolgen, so dass das Dokument 31 bei einer Änderung der Steuereinheit und/oder der Adresse nicht geändert zu werden braucht. In diesem Fall ist lediglich eine Änderung des entsprechenden Adresseintrags in der Datei 37 erforderlich.

Sowohl in der Ausführungsform der Fig. 2 als auch in der Ausführungsform der Fig. 3 ist auch die Übertragung eines Eingabewertes von dem Client-Computer 33 zu einer Steuereinheit möglich. Dazu gibt der Nutzer in ein Eingabefeld des Dokumentes 28, beispielsweise in das Feld A, einen Eingabewert ein. Durch Betätigung der Eingabetaste von dem Nutzer des Client-Computers 33 wird das Skript 29 aktiviert.

Das Skript 29 sendet dann ein Kommando an den Anlagen-Server-Computer 27. Dieses Kommando beinhaltet als Argumente den Eingabewert sowie die dem Eingabefeld zugeordnete Adresse und Steuereinheit. Diese wurde zuvor von dem Skript 29 anlässlich der Übertragung der Prozesswerte von den Steuereinheiten zu dem Client-Computer ermittelt, wie oben erläutert.

Der Anlagen-Server-Computer 27 führt dann einen Schreibzugriff auf die entsprechende Adresse der entsprechenden Steuereinheit aus - in dem betrachteten Beispiel für das Feld A als Eingabefeld ist dies die SPS X mit der Adresse a - um dort den Eingabewert zu speichern.

Für den Fall, dass nur eine Steuereinheit vorhanden ist, beinhaltet die Tabelle 32 bzw. die Datei 37 lediglich eine entsprechende Adressangabe, da sich die Spezifizierung der Steuereinheit dann erübrigt.

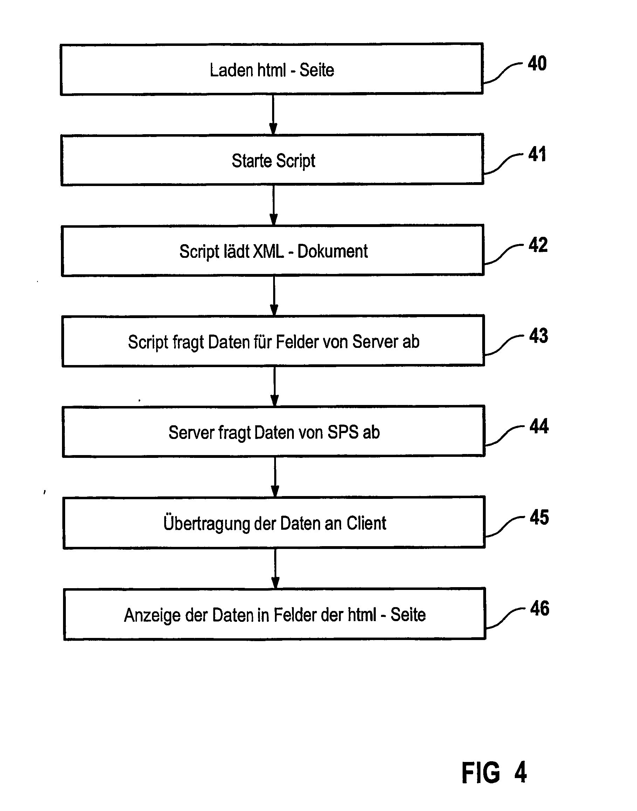

Die Fig. 4 zeigt ein Flussdiagramm einer Ausführungsform des Verfahrens zur Übertragung eines Prozesswerts. In dem Schritt 40 wird von dem Client-Computer zunächst ein Dokument in einer Auszeichnungssprache, beispielsweise HTML, geladen. In dem Schritt 41 wird ein in der HTML-Seite codiertes Skript gestartet, welches in den Schritt 42 ein weiteres der html-Seite zugeordnetes Dokument in einer Auszeichnungssprache, beispielsweise XML, von dem Anlagen-Server-Computer lädt.

Mittels der Adressangaben in dem XML-Dokument fragt das Skript in dem Schritt 43 die entsprechenden Daten für die Felder des HTML Dokuments von dem Anlagen-Server-Computer ab. Der Anlagen-Server-Computer fragt darauf hin in dem Schritt 44 die entsprechenden Daten von der oder den Steuereinheiten ab. Diese Daten werden dann in dem Schritt 45 von dem Anlagen-Server-Computer an den Client-Computer übertragen und in dem Schritt 46 in den entsprechenden Feldern der html-Seite angezeigt.

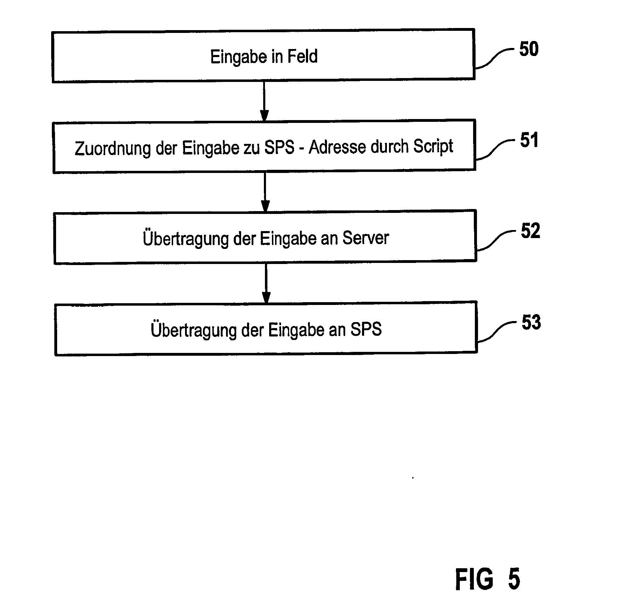

Die Fig. 5 zeigt eine Ausführungsform des erfindungsgemäßen Verfahrens zu Übertragung eines Eingabewerts von einem Client-Computer zu einer Steuereinheit. Der Eingabewert wird in dem Schritt 50 in eines der Felder des HTML Dokuments, beispielsweise dem Feld A (vergleiche Figuren 2 und 3), eingegeben. In dem Schritt 51 wird dieser Eingabewert einer bestimmten Adresse zugeordnet, d.h. einer bestimmten Steuereinheit, falls mehrere Steuereinheiten vorhanden sind, und einer Speicheradresse auf der betreffenden Steuereinheit. Diese Zuordnung des Eingabewerts zu einer Adresse erfolgt über die entsprechende Zuordnung des Eingabefelds zu der Adresse, die mittels eines weiteren Dokuments in einer Auszeichnungssprache (vergleiche Dokument 31 der Figuren 2 und 3) gegeben ist.

In dem Schritt 52 wird der Eingabewert zusammen mit der Adresse an den Server übertragen und von dort auf der entsprechenden Adresse abgespeichert.

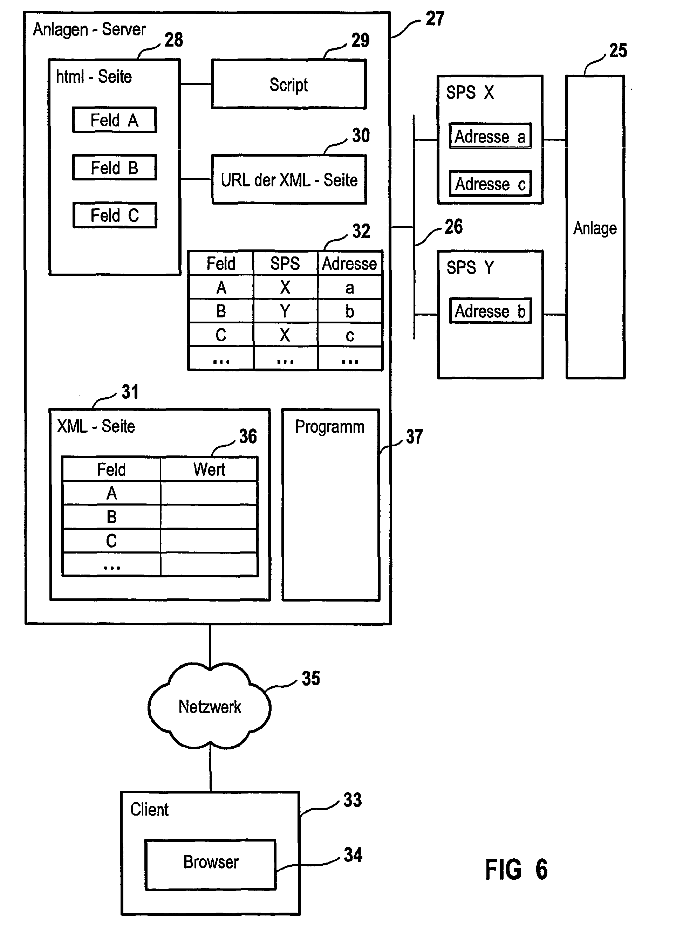

Die Fig. 6 zeigt eine weitere bevorzugte Ausführungsform eines Steuerungssystems zur Steuerung und/oder Regelung einer Anlage 25. Elemente des Steuerungssystems der Figur 6, die Elementen des Steuerungssystems der Fig. 2 entsprechen, sind mit denselben Bezugszeichen bezeichnet.

Im Unterschied zu dem Steuerungssystem der Fig. 2 ist die Tabelle 32 nicht Bestandteil des Dokuments 31, sondern ist separat in dem Anlagen-Server-Computer 27 gespeichert. Anstelle dessen beinhaltet das Dokument 31 eine Tabelle 36 zur Zuordnung von aktuellen Anzeigewerten zu den Feldern A, B, C, ...

Ferner gehört zu dem Anlagen-Server-Computer 27 ein Programm 37. Das Programm 37 generiert das Dokument 31 mit der Tabelle 36 automatisch durch entsprechende zugriffe auf die SPS X, SPS Y, ... mittels der Tabelle 32. Für jede Seite 28 existiert eine eigene Tabelle 32.

Im Vergleich zu der Ausführungsform der Fig. 2 ist bei der Ausführungsform der Fig. 6 vorteilhaft, dass an den Client unmittelbar die Anzeigewerte übertragen werden und nicht die Adressen, die eine Abfrage dieser Werte ermöglichen. Im Vergleich zu der Ausführungsform der Fig. 2 ist deshalb bei der Ausführungsform der Fig. 6 die Belastung des Netzwerks 35 reduziert. Dies wird insbesondere dadurch erreicht, dass das Programm 37 serverseitig die Tabelle 36 in dem Dokument 31 durch Zugriff auf die Tabelle 32 generiert.

Beim Betrieb des Systems der Fig. 6 geht ein Nutzer des Client-Computers 33 mittels des Browsers 34 über das Netzwerk 35 zu dem html Dokument 28, indem der Nutzer beispielsweise einen entsprechenden Hypertextlink selektiert oder die URL des Dokuments 28 in den Browser 34 eingibt.

Das Dokument 28 wird dann über das Netzwerk 35 zu dem Client-Computer 33 übertragen. Ferner wird das Skript 29 des Dokuments 28 automatisch auf dem Client-Computer 33 gestartet und ausgeführt. Bei dem Skript kann es sich beispielsweise um ein JAVA-Skript oder um ein Visual-Basic-Skript handeln; alternativ kann auch ein so genanntes Applet zur Anwendung kommen.

Das Skript 29 liest den Zeiger 30 des Dokuments 28 und greift auf das Dokument 31 auf dem Anlagen-Server-Computer 27 mittels der entsprechenden URL zu. Daraufhin ermittelt das Programm 37 aus der Tabelle 32 die Adressen der benötigten Werte in den SPSen und holt die Werte über den Feldbus 26. Anschließend generiert das Programm 37 das Dokument 31, in dem die Tabelle 36 mit der Zuordnung Feld/Wert codiert ist. Daraufhin wird das Dokument 31 über das Netzwerk 35 zu dem Client-Computer 33 übertragen.

Das Skript 29 liest dann die Zuordnungen der Felder A, B, C zu den Werten in der Tabelle 36 aus und modifiziert die angezeigten Elemente der HTML-Seite 28 im Browser 34. Dabei können die Werte z.B. als Zahlenwerte in HTML Felder angezeigt werden oder ein Wert kann z.B. auch in eine Farbänderung eines HTML Elements übersetzt werden.

Auf die gleiche Art und Weise können auch Benutzereingaben im Browser 34 vom Client 33 in die Anlage 25 übertragen werden. Wenn ein Benutzer HTML Felder der im Browser 34 angezeigten HTML Seite 28 geändert hat, erzeugt das Script 29 auf dem Client 33 ein Dokument 31, in dem die Tabelle 36 mit der Zuordnung Feld/Wert codiert ist.

Dieses Dokument 31 wird vom Client 33 zum Anlagenserver 27 übertragen. Dort interpretiert übersetzt das Programm 37 mit Hilfe der Tabelle 32 die Feldnamen aus der Tabelle 36 in SPS Adressen und schickt die Werte aus Tabelle 37 über den Feldbus 26 an die entsprechenden SPSen.

Entsprechend ist es auch möglich die Ausführungsform der Fig. 3 so zu variieren, dass das Dokument 31 eine Tabelle 36 mit den Feldwerten beinhaltet. Hierzu wird die Tabelle 38 (vgl. Fig. 3 auf dem Anlagen-Server 27 gespeichert, und ein entsprechendes Programm 37 generiert die Feldwerte.

Zusammengefasst handelt es sich bei der Erfindung um ein Steuerungssystem mit zumindest einer Steuerungseinheit SPS X, SPS Y, ..., einem Server-Computer, einem ersten Dokument in einer Auszeichnungssprache und einem zweiten Dokument in einer Auszeichnungssprache zum Laden durch einen Client-Computer, wobei das erste Dokument zumindest ein Feld A, B, C, ... beinhaltet und das zweite Dokument Daten zur Zuordnung des Felds zu einer Adresse einer Steuereinheit beinhaltet.

## Patentansprüche

1. Verfahren zur Übertragung eines Prozesswerts von einer Steuereinheit zu einem Client-Computer (33) mit wenigstens einem Zugriff auf ein erstes Dokument (28) in einer Auszeichnungssprache von einem Server-Computer (27), wobei das erste Dokument (28) zumindest ein Feld für den Prozesswert aufweist,
und mit wenigstens einem Zugriff auf ein zweites Dokument (31) in einer Auszeichnungssprache, wobei das zweite Dokument (31) Daten zur Zuordnung des Felds zu einer Adresse der Steuereinheit aufweist,
**dadurch gekennzeichnet,**
**dass** das Feld zu der Adresse der Steuereinheit zugeordnet wird, wobei zur Zuordnung des zweiten Dokuments (31) zu dem ersten Dokument (28) seitens des Server-Computers (36) auf eine Datenbank (36) zugegriffen wird,
der Prozesswert von der Adresse abgefragt wird und
der Prozesswert von dem Server-Computer (27) an den Client-Computer (33) übertragen wird.

2. Verfahren zur Übertragung eines Eingabewerts von einem Client-Computer (33) zu einer Steuereinheit mit wenigstens einem Zugriff auf ein erstes Dokument (28) in einer Auszeichnungssprache von einem Server-Computer (27), wobei das erste Dokument (28) zumindest ein Feld für den Eingabewert aufweist, mit wenigstens einem Zugriff auf ein zweites Dokument (31) in einer Auszeichnungssprache, wobei das zweite Dokument (31) Daten zur Zuordnung des Felds zu einer Adresse der Steuereinheit beinhaltet,
und durch eine Eingabe des Eingabewerts in das Feld,
**dadurch gekennzeichnet,**
**dass** das Feld zu der Adresse der Steuereinheit zugeordnet wird, wobei zur Zuordnung des zweiten Dokuments (31) zu dem ersten Dokument (28) seitens des Server-Computers (36) auf eine Datenbank (36) zugegriffen wird, und
der Eingabewert von dem Server-Computer (27) an die Steuereinheit übertragen wird.

3. Verfahren nach Anspruch 1 oder 2, wobei das erste Dokument (28) ein Skript (29) beinhaltet.

4. Verfahren nach Anspruch 1, 2 oder 3, wobei ein Skript (29) des ersten Dokuments (28) eine Abfrage der Datenbank (36) durchführt, um die Zuordnung des ersten Dokuments (28) zu einem zweiten Dokument (31) zu ermitteln.

5. Verfahren nach einem der vorhergehenden Ansprüche 1 bis 4, wobei das erste Dokument (28) einen Zeiger (30) auf das zweite Dokument (31) beinhaltet, und es sich bei dem Zeiger (30) auf das zweite Dokument (31) vorzugsweise um eine URL handelt.

6. Verfahren nach einem der vorhergehenden Ansprüche 1 bis 5, wobei die Daten zur Zuordnung des Felds zu einer Adresse der Steuereinheit eine Adresse der Steuereinheit beinhalten.

7. Verfahren nach einem der vorhergehenden Ansprüche 1 bis 6, wobei das zweite Dokument (31) dem Feld des ersten Dokuments (28) eine Bezeichnung zuordnet und mittels eines Skripts (29) eine Datenbank (36) des Server-Computers (27) abgefragt wird, die eine Zuordnung der Bezeichnung zu einer Adresse der Steuereinheit beinhaltet.

8. Computerprogrammprodukt mit computerlesbaren Mitteln zur Ausführung eines Verfahrens nach einem der vorhergehenden Ansprüche 1 bis 7, wenn das Programm auf einem Steuerungssystem ausgeführt wird.

9. Steuerungssystem mit zumindest einer Steuerungseinheit (SPS X, SPS Y), einem Server-Computer (27), einem ersten Dokument (28) in einer Auszeichnungssprache und einem zweiten Dokument (31) in einer Auszeichnungssprache zum Laden durch einen Client-Computer (33), wobei das erste Dokument zumindest ein Feld (A, B, C) beinhaltet,
**dadurch gekennzeichnet,**
**dass** das Steuerungssystem eine erste Datenbank (36) zur Zuordnung des ersten und des zweiten Dokuments (28, 31) auf dem Server-Computer (27)aufweist, wobei das zweite Dokument Daten zur Zuordnung des Felds zu einer Adresse (a , b, c) der Steuereinheit beinhaltet.

10. Steuerungssystem nach Anspruch 9, bei dem das erste Dokument (28) ein Skript (29) beinhaltet.

11. Steuerungssystem nach Anspruch 9 oder 10, bei dem das erste Dokument (28) einen Zeiger (30) auf das zweite Dokument (31) beinhaltet, und es sich bei dem Zeiger (30) vorzugsweise um eine URL handelt.

12. Steuerungssystem nach einem der vorhergehenden Ansprüche 9 bis 11, bei dem die Daten zur Zuordnung des Felds zu einer Adresse der Steuereinheit eine Adresse (a, b, c) der Steuereinheit beinhalten.

13. Steuerungssystem nach einem der vorhergehenden Ansprüche 9 bis 12, bei dem die Daten zur Zuordnung des Felds zu einer Adresse der Steuereinheit dem Feld eine Bezeichnung zuordnen und mit einer zweiten Datenbank (37) auf dem Server-Computer (27) zur Zuordnung der Bezeichnung zu der Adresse der Steuereinheit.

## Revendications

1. Procédé de transmission d'une valeur de processus d'une unité de commande à un ordinateur client (33) avec au moins un accès à un premier document (28) dans un langage de balisage par un ordinateur serveur (27), le premier document (28) comportant au moins un champ pour la valeur de processus,
et avec au moins un accès à un deuxième document (31) dans un langage de balisage, le deuxième document (31) comportant des données pour associer le champ à une adresse de l'unité de commande,
**caractérisé par le fait que**
on associe le champ à l'adresse de l'unité de commande, un accès à une base de données (36) étant effectué du côté de l'ordinateur serveur (36) pour associer le deuxième document (31) au premier document (28),
on interroge la valeur de processus de l'adresse, et
on transmet la valeur de processus de l'ordinateur serveur (27) à l'ordinateur client (33).

2. Procédé de transmission d'une valeur d'entrée d'un ordinateur client (33) à une unité de commande avec au moins un accès à un premier document (28) dans un langage de balisage par un ordinateur serveur (27), le premier document (28) comportant au moins un champ pour la valeur d'entrée, et avec au moins un accès à un deuxième document (31) dans un langage de balisage, le deuxième document (31) comportant des données pour associer le champ à une adresse de l'unité de commande,
et par une entrée de la valeur d'entrée dans le champ,
**caractérisé par le fait que**
on associe le champ à l'adresse de l'unité de commande, un accès à une base de données (36) étant effectué du côté de l'ordinateur serveur (36) pour associer le deuxième document (31) au premier document (28), et
on transmet la valeur d'entrée de l'ordinateur serveur (27) à l'unité de commande.

3. Procédé selon la revendication 1 ou 2, le premier document (28) contenant un script (29).

4. Procédé selon la revendication 1, 2 ou 3, un script (29) du premier document (28) effectuant une interrogation de la base de données (36) pour déterminer l'association du premier document (28) à un deuxième document (31).

5. Procédé selon l'une des revendications précédentes 1 à 4, le premier document (28) contenant un pointeur (30) sur le deuxième document (31) et le pointeur (30) sur le deuxième document (31) étant de préférence une URL.

6. Procédé selon l'une des revendications précédentes 1 à 5, les données pour l'association du champ à une adresse de l'unité de commande contenant une adresse de l'unité de commande.

7. Procédé selon l'une des revendications précédentes 1 à 6, le deuxième document (31) associant un nom au champ du premier document (28) et une base de données (36) de l'ordinateur serveur (27) étant interrogée au moyen d'un script (29), laquelle base de données contient une association du nom à une adresse de l'unité de commande.

8. Programme informatique avec des moyens lisibles par ordinateur pour l'exécution d'un procédé selon l'une des revendications précédentes 1 à 7 lorsque le programme est exécuté sur un système de commande.

9. Système de commande avec au moins une unité de commande (SPS X, SPS Y), un ordinateur serveur (27), un premier document (28) dans un langage de balisage et un deuxième document (31) dans un langage de balisage pour le chargement par un ordinateur client (33), le premier document contenant au moins un champ (A, B, C),
**caractérisé par le fait que**
le système de commande comporte une première base de données (36) pour l'association du premier et du deuxième document (28, 31) sur l'ordinateur serveur (27), le deuxième document contenant des données pour l'association du champ à une adresse (a, b, c) de l'unité de commande.

10. Système de commande selon la revendication 9, dans lequel le premier document (28) contient un script (29).

11. Système de commande selon la revendication 9 ou 10, dans lequel le premier document (28) contient un pointeur (30) sur le deuxième document (31) et le pointeur (30) est de préférence une URL.

12. Système de commande selon l'une des revendications précédentes 9 à 11, dans lequel les données pour l'association du champ à une adresse de l'unité de commande contiennent une adresse (a, b, c) de l'unité de commande.

13. Système de commande selon l'une des revendications précédentes 9 à 12, dans lequel les données pour l'association du champ à une adresse de l'unité de commande associent au champ un nom et avec une base de données (37) sur l'ordinateur serveur (27) pour l'association du nom à l'adresse de l'unité de commande.

## Claims

1. Method for transmission of a process value from a control unit to a client computer (33), with at least access to a first document (28) in a markup language of a server computer (27), with the first document (28) having at least one field for the process value,
and with at least access to a second document (31) in a markup language, with the second document (31) having data for assigning the field to an address of the control unit,
**characterised in that**
the field is assigned to the address of the control unit, in which a data bank (36) is accessed to assign the second document (31) to the first document (28) on the part of the server computer (36), the process value from the address is queried and the process value is transmitted from the server computer (27) to the client computer (33).

2. Method for transmission of an input value from a client computer (33) to a control unit, with at least access to a first document (28) in a markup language of a server computer (27), with the first document (28) having at least one field for the input value, with at least access to a second document (31) in a markup language, with the second document (31) having data for assigning the field to an address of the control unit and by entry of the input value into the field,
**characterised in that**
the field is assigned to the address of the control unit in which a data bank (36) is accessed to assign the second document (31) to the first document (28) on the part of the server computer (36), and the input value from the server computer (27) is transmitted to the control unit.

3. Method according to claim 1 or 2, with the first document (28) containing a script (29).

4. Method according to claim 1, 2, or 3, with a script (29) of the first document (28) executing a query of the database (36) in order to determine the assignment of the first document (28) on the part of the server computer (27)

5. Method according one of the preceding claims 1 to 4 wherein the first document (28) contains a pointer (30) to the second document (31) and the pointer (30) to the second document (31) is preferably a URL.

6. Method according one of the preceding claims 1 to 5, wherein the data for assigning the field to an address of the control unit contains an address of the control unit.

7. Method according to one of the preceding claims 1 to 6, wherein the second document (31) assigns a designation to the field of the first document (28) and a database (36) of the server computer (27) is queried using a script (29), said database containing an assignment of the designation to an address of the control unit.

8. Computer program product having computer-readable means for performing a method according to one of the preceding claims 1 to 7 when the program is executed on a control system.

9. Control system having at least one control unit (SPS X, SPS Y), a server computer (27), a first document (28) in a markup language and a second document (31) in a markup language for loading by a client computer (33), wherein the first document contains at least one field (A, B, C)
**characterised in that**
the control system comprises a first data base (36) for assigning the first and the second document (28, 31) to the server computer (27), with the second document containing data for assigning the field to an address (a, b, c) of the control unit.

10. Control system according to claim 9, wherein the first document (28) contains a script (29).

11. Control system according to claim 9 or 10, wherein the first document (28) contains a pointer (30) to the second document (31) and the pointer (30) is preferably a URL.

12. Control system according to one of the preceding claims 9 to 11, wherein the data for assigning the field to an address of the control unit contains an address (a, b, c) of the control unit.

13. Control system according to one of the preceding claims 9 to 12, wherein the data for assigning the field to an address of the control unit assigns a designation to the field and having a second database (37) on the server computer (27) for assigning the designation to the address of the control unit.
